# EUROPEAN PATENT SPECIFICATION

(11) **EP 2 305 996 B1**
(45) Date of publication and mention of the grant of the patent: **24.01.2018**
(21) Application number: 11151548.2
(22) Date of filing: 21.12.2007
(51) Int. Cl.: F02M 69/46, F16B 5/02, F02M 61/14, F02M 55/02, F02M 61/16, F02M 63/00

(54) **Flexible mounting arrangement**
Flexible Montageanordnung
Agencement d'assemblage flexible

(43) Date of publication of application: 06.04.2011
(62) Divisional of application: 07150300.7
(73) Proprietor: Caterpillar Motoren GmbH & Co. KG, 24159 Kiel (DE)
(72) Inventor: Abraham, Volker, 24159, Kiel (DE); Ulrich, Hopmann, 24229 Schwedeneck (DE)
(74) Representative: BRP Renaud & Partner mbB Rechtsanwälte Patentanwälte Steuerberater

(56) References cited:
- WO-A1-2004/085188
- GB-A- 2 023 729
- GB-A- 2 399 392
- US-A- 4 586 477

## Description

### Technical Field

This patent disclosure relates generally to a flexible mounting arrangement having a set of lamellae.

### Background

Internal combustion engine design is subject to increasingly stringent emissions regulations. Many advancements have been made over the years and one particular type of engine design is becoming increasingly popular because of its flexibility in engine control strategies. This type of engine is known as a common rail and although various designs exist they tend to operate on the same principle. At least two or more injectors are fed fuel from the same fuel gallery. The fuel gallery may during operation be continuously pressurised such that pressurised fuel may be standing at the inlet of each fuel injector. Each fuel injector may then be controlled to open the injection channel such that fuel from the shared gallery can be injected in a particular combustion chamber. There is a demand for engines, for example large medium speed engines, that can run on heavy fuels or alternative fuels. Such fuels may at ambient temperature not have the right viscosity or be suitable for injection. For example, certain heavy fuels may have to be heated to well in excess of a 100°C before they become suitable for injection. This may require specialist heating devices to heat the fuel. It has been found that a combination of a shared fuel gallery such as found on common rail engines and the requirement to heat fuel to relatively high temperatures may cause problems due to expansion of components. The shared fuel gallery must be securely mounted on the engine, but any mounting arrangement must allow sufficient flexibility to cope with expansion of the fuel gallery. International patent publication WO 2004/085188 A discloses an exhaust-system support comprising a supporting element in the form of a laminated support consisting of two strip-type, elastic plates which are superimposed in the form of a stack and can be displaced in relation to each other over at least part of the length thereof. Furthermore British patent publication GB 2 023 729 A discloses a fuel injection apparatus for an internal combustion engine, comprising a valve, a first support element adapted to locate a first portion of the valve relative to such engine, a fuel duct connecting element so pluggable over a second portion of the valve as to be removable without loosening the valve from said location thereof, an outwardly acting seal disposed between the second portion of the valve and the connecting element, and a second support element at least indirectly locating the connecting element in a predetermined position. The current disclosure is aimed at overcoming or alleviating some or all of the aforementioned problems.

### Summary of the Invention

The current invention relates to a flexible mounting arrangement comprising a bracket with a fastening arrangement. The bracket clamps around a fuel rail of an internal combustion engine.. An elastomeric member is interposed between the bracket and the fuel rail. A set of lamellae has at least two lamellae arranged adjacent one another. The set of lamellae has a first portion adapted to connect to an engine portion of the internal combustion engine and a second portion adapted to connect to the bracket. At least one of the first and second portions includes base portions of the at least two lamellae that are clamped together.

Other features and aspects of this disclosure will be apparent from the following description and the accompanying drawings.

### Brief Description of the Drawings

Fig. 1 is a schematical representation of an isometric view of a portion of a fuel system for an internal combustion engine.
Fig. 2 is a schematical representation showing an exemplary embodiment of a flexible mounting arrangement for the fuel system of Fig. 1.
Fig. 3 is similar to Fig. 2 but as viewed from a different angle.

### Detailed Description

The following description demonstrates one or more exemplary embodiments of the current disclosure. Although the embodiments are in the context of internal combustion engines, it is to be understood that these examples are not intended to limit the disclosure to this particular field. The disclosure may readily be used in any other suitable application such as for example turbines, construction machine, electric and/or hydraulic circuits, and any other field that may benefit from the disclosure.

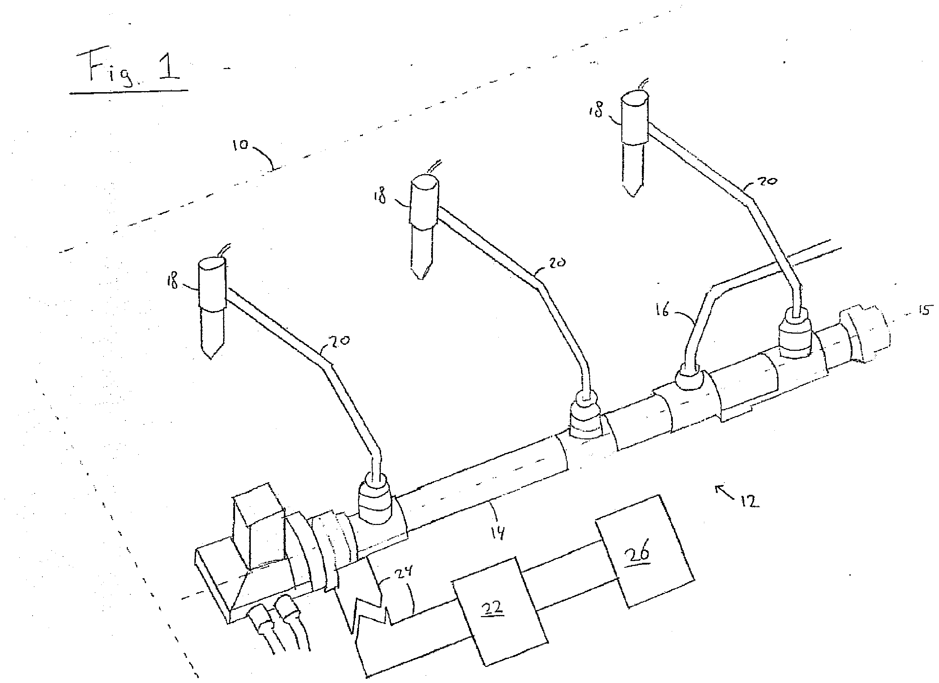

Referring to Fig. 1, an internal combustion engine 10, which is schematically outlined with a dotted line may be provided with a fuel system 12. The fuel system 12 may be any suitable system, but in the embodiment shown in Fig. 1, the fuel system 12 is shown as a common rail fuel system. In this embodiment the fuel system 12 may have at least one rail 14 having a first generally longitudinal axis 15. The rail 14 may be connected to a second rail 14 (not shown) if preferred. The two rails 14 may be independent or they may be fluidly connected by for example a transfer conduit 16. The rail 14 may be fluidly connected with any number of injectors 18 via conduits 20. Each injector 18 may be provided with a suitable actuation arrangement (not shown) such as mechanical, fluid, or electronic actuation to actuate the injector 18 thereby selectively allowing fuel to pass through the injector 18 into a combustion chamber (not shown) associated with the respective injector 18. The rail 14 may act as a storage chamber for pressurized fuel. The fuel may be supplied by a pump 22 via a conduit 24. Where the fuel used is a heavy fuel such that at ambient temperatures the fuel displays a high viscosity, it may be desirable to provide a heating arrangement 26 to heat the fuel such that the viscosity is low enough for the fuel to pass effectively through the fuel system 12. The heating arrangement may for example heat the fuel to a temperature well in excess of 100° Celsius. The heating arrangement 26 may be of any suitable type and may be placed at any suitable position, for example it may be positioned upstream or downstream from the pump 22.

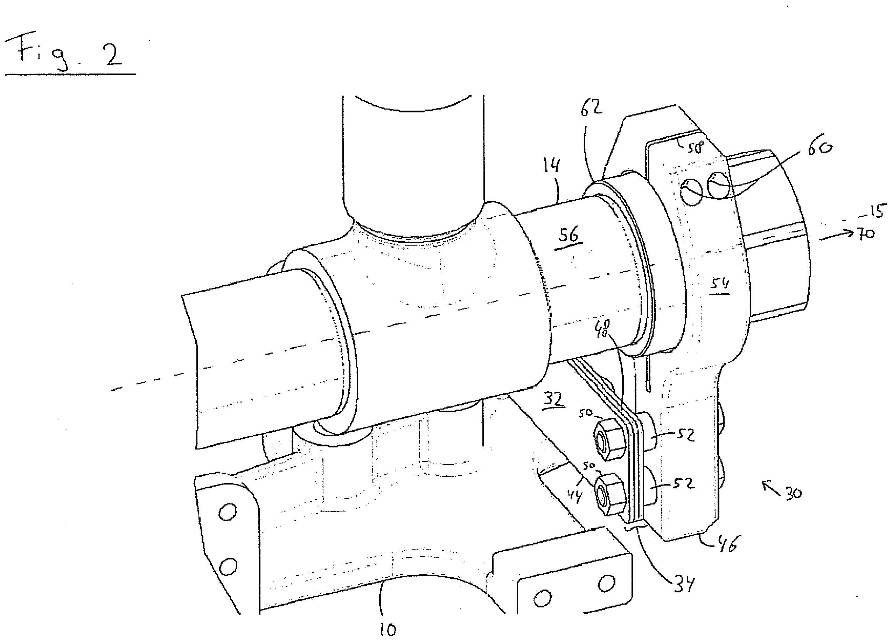

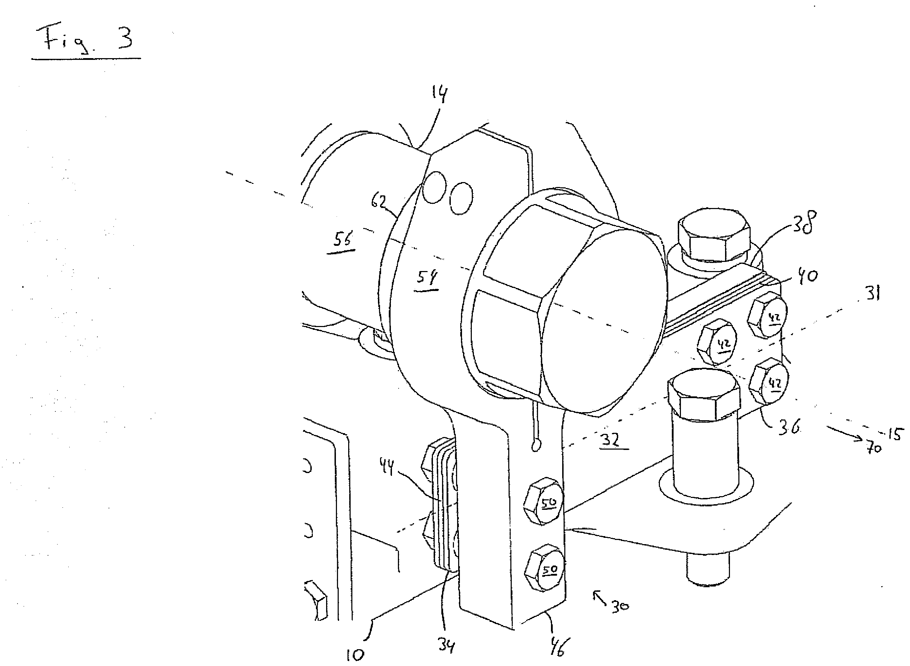

The rail 14 may be mounted onto the engine 10 via a flexible mounting arrangement 30 shown in more detail in Figs. 2 and 3.

The mounting arrangement 30 may comprise a set of lamellae 32 having, at a neutral position, a second generally longitudinal axis 31. In one embodiment the first and second generally longitudinal axes 15 and 31 may be substantially perpendicular to one each other.

The set of lamellae 32 may have at least two lamellae 34 arranged adjacent to each other. In one embodiment as, shown in Figs. 2 and 3, the set of lamellae 32 includes three lamellae 34, but any multiple number of lamellae 34 may be chosen if preferred.

The lamellae may be formed as preferred, but in one embodiment at least one of the lamellae 34 may be formed from sheet metal in accordance with engineering standard St52-3. In one embodiment the thickness of at least one or of all lamellae is about 3 millimeter. In one embodiment the lamellae may have a generally rectangular shape. In other embodiments the lamellae may be generally shaped like, for example, squares, triangles, circles, ovals or any other suitable shape.

The set of lamellae 32 may have a first portion 36 for connecting to a first element 38 which may be a first portion of the engine 10. In one embodiment the first element 38 may include base portions 40 of the lamellae 34 that are clamped together. In one embodiment the base portions 40 may be clamped together and fixed to the first element 38 via one or more fasteners 42 extending through holes 41 in the lamellae 34. However, the function of clamping the lamellae 34 and connecting the set of lamellae 32 to the first element 38 do not have to be combined and may be performed by different fastening arrangements.

In one embodiment the base portions 40 of the lamellae 34 are clamped together such that no significant movement can take place of at least one base portion 40 relative to at least one other base portion 40.

The set of lamellae 32 may further comprise a second portion 44 for connecting to a second element 46. The second portion 44 may include base portions 48 of the lamellae 34 that are clamped together and connected to the second element 46 via one or more fasteners 50 extending through holes 51 in the lamellae 34. However, the function of clamping the lamellae 34 and connecting the set of lamellae 32 to the first element 38 do not have to be combined and may be performed by different fastening arrangements.

In one embodiment the base portions 48 of the lamellae 34 are clamped together such that no significant movement can take place of at least one base portion 48 relative to at least one other base portion 48.

It is to be understood that the fasteners 42 and 50 are shown as threaded fasteners whereby each fastener 42 threads into a blind hole (not shown) in the first element 38 and each fastener 50 is of the nut-and-bolt type. However, these are exemplary embodiments only and other fastening arrangements may be chosen if preferred. Any selected fastening arrangement may be provided with locking features to prevent the fastening arrangement from loosening during operation.

The holes 41 and 51 in the lamellae 34 may be provided to correspond to the preferred fastening arrangement, but in one embodiment the holes in at least one or all of the lamellae are manufactured to DIN EN 20273. Manufacturing the holes 41 and 51 to this standard may contribute to reducing or preventing any significant movement of at least one base portion 40 relative to at least one other base portion 40, and/or of at least one base portion 48 relative to at least one other base portion 48.

In one embodiment one or more spacers 52 may be provided between the set of lamellae 32 and the second element 46. In a similar vain, spacers (not shown) may be provided between the set of lamellae 32 and the first element 38.

In one embodiment the second element 46 may be a bracket 54 for connecting with a third element 56 which may for example be the rail 14. In this embodiment the bracket 54 may be provided with a split 58 to enable the bracket 54 to be clamped around the rail 14 with a fastening arrangement 60 which may include for example threaded fasteners.

In one embodiment an elastomeric member 62 may be incorporated in the flexible mounting arrangement 30. In the embodiment shown in Figs. 2 and 3 the elastomeric member 62 is interposed between the second and third elements 54 and 56, i.e. between the bracket 46 and the rail 14. However, the elastomeric member may also be positioned at any other suitable position such as between the set of lamellae 32 and the second element 46. In one embodiment the spacers 52 and the elastomeric member 62 may be co-located and/or even joined together to form a single component. The elastomeric member 62 may be made of any suitable material such as for example a rubber or rubber compound.

### Industrial Applicability

Using a mounting arrangement such as flexible mounting arrangement 30 may provide a durable and flexible connection between two elements. For example, the flexible mounting arrangement 30 may be used on the engine 10 to connect a rail 14 to another portion of the engine 10. During operation the rail 14 may get hot as it may act as a conduit and/or temporary storage chamber for fuel which has been preheated to relatively high temperatures. Depending on the size, shape, temperature and material of the rail 14 and associated components, the rail 14 may undergo significant thermally induced expansions and contractions. If the rail 14 was to be fixed such that no arrangements were made to compensate for the expansions and contractions, material failures may occur in the rail 14 and/or any elements connected thereto. Conversely, if the rail 14 was left wholly or partially loose, vibrations and movement of the rail 14 may also lead to material failures.

However, the flexible mounting arrangement 30 is configured to adapt its shape to accommodate thennal expansion and contraction. Once again referring to Figs. 1-3, in an exemplary operation the rail 14 may expand due to the heat transferred from the pre-heated fuel. In an element such as rail 14 this may manifest itself predominantly as an extension along the longitudinal axis 15. As the bracket 54 is connected to the rail 14, the bracket 54 is subject to a force 70 in a direction generally away from the engine 10. The set of lamellae 32 can due to its laminar construction bend generally between the first and second base portions 40 and 44. The lamellae 34 are configured to bend simultaneously whilst the base portions 40 of at least two or all lamellae 34 may remain in a substantially fixed position relative to each other. Similarly, the base portions 48 of at least two or all lamellae 34 may remain in a substantially fixed position relative to each other. By being configured as such, the set of lamellae 32 allows the first and second portions 36 and 44 to move relative to each other. The bracket 54 therefore can move with an associated portion of the rail 14 under the influence of the force 70 whilst remaining securely connected to the engine 10 via the first element 38. During this process the elastomeric member 62 may be deformed to at least partially compensate for misalignment caused by the bending of the set of lamellae 32. For example, the elastomeric element may compensate for misalignment between the bracket 54 and the rail 14. Additionally, or alternatively, the spacers 52 may reduce or eliminate the transfer of any undesired mechanical stresses between the set of lamellae 32 and the first and/or second portions 36 and 40.

By flexing the set of lamellae 32, the set of lamellae 32 may exert a counter force to the force 70 with a tendency to bias the set of lamellae 32 to a neutral position. This counterforce may contribute to the flexible mounting arrangement 30 providing a durable, strong and stable arrangement whilst allowing flexibility. The neutral position in this context may be interpreted as a position in which the set of lamellae 32 is subjected to a minimal amount of bending moment. However, if preferred, the set of lamellae may be designed or fitted such that a certain amount of bending moment is present in the neutral position i.e. the set of lamellae may be pre-stressed.

It is to be understood that the aforementioned processes may be wholly reversible in case of thermal contraction.

Although the preferred embodiments of this invention have been described herein, improvements and modifications may be incorporated without departing from the scope of the following claims.

In another exemplary embodiment the flexible mounting arrangement may be configured to connect a component with an internal combustion engine via a set of lamellae having at least two adjacently arranged lamellae. The component may thermally expand during the internal combustion engine runs. Furthermore, the set of lamellae is configured to send to accomodate expansion of said component.

## Claims

1. A flexible mounting arrangement (30) comprising:
- a bracket (54) with a fastening arrangement (60), said bracket (54) clamping around a fuel rail (14);
- an elastomeric member (62) interposed between said bracket (54) and said fuel rail (14); and
- a set of lamellae (32) having at least two lamellae (34) arranged adjacent one another, said set of lamellae (32) having a first portion (36) adapted to connect to an engine portion of an internal combustion engine (10) and a second portion (44) connected to said bracket (54), at least one of said first and second portions (36, 44) including base portions (40, 48) of said at least two lamellae (34) that are clamped together.

2. The mounting arrangement (30) according to claim 1, wherein said base portions (40, 48) of said at least two lamellae (34) are in a substantially fixed position relative to each other.

3. The mounting arrangement (30) according to any of the preceding claims, wherein at least one spacer (52) is provided between said seat of lamellae (32) and said bracket (54).

4. The mounting arrangement (30) according to any of the preceding claims, wherein an elastomeric member (62) is interposed between said set of lamellae (32) and said bracket (54)

5. The mounting arrangement (30) according to claim 4, wherein at a neutral position said set of lamellae (32) and said fuel rail (14) define first and second longitudinal axes (15, 31) respectively, wherein said first and second longitudinal axes (15, 31) are substantially perpendicular to each other.

6. The mounting arrangement (30) according to any one of the preceding claims, wherein said at least two lamellae (34) are configured to bend simultaneously.

7. The mounting arrangement (30) according to any one of the preceding claims, wherein said set of lamellae (34) is configured to bias said first and second portions (36, 44) towards a first position relative to each other.

8. The mounting arrangement (30) according to any one of the preceding claims, wherein said flexible mounting arrangement (30) is configured to adapt its shape to accommodate thermal expansion of at least said second element (46).

9. A method of connecting a flexible mounting arrangement (30), the method comprising:
connecting the mounting arrangement (30) according to any of the preceding claims between said fuel rail (14) and said internal combustion engine (10);
thermally expanding the fuel rail (14) when said internal combustion engine runs (10);
bending said set of lamellae (32) to accommodate expansion of said component.

10. The method according to claim 9, further comprising:
deforming an elastomeric member (62) to at least partially compensate for misalignment caused by said bending of said set of lamellae.

## Patentansprüche

1. Flexible Befestigungsanordnung (30), umfassend:
- eine Klammer (54) mit einer Festmachanordnung (60), wobei die Klammer (54) um ein Kraftstoffverteilerrohr (14) klemmt;
- ein elastomerisches Bauteil (62), das sich zwischen der Klammer (54) und dem Kraftstoffverteilerrohr (14) befindet; und
- einen Lamellensatz (32), der wenigstens zwei nebeneinander angeordnete Lamellen (34) aufweist, wobei der Lamellensatz (32) einen ersten Bereich (36), der angepasst ist, um sich mit einem Motorbereich einer Brennkraftmaschine (10) zu verbinden, und einen zweiten mit der Klammer (54) verbundenen Bereich (44) besitzt, wobei wenigstens einer der ersten und zweiten Bereiche (36, 44) Basisbereiche (40, 48) der wenigstens zwei Lamellen (34) aufweist, die zusammengeklemmt sind.

2. Befestigungsanordnung (30) nach Anspruch 1, wobei die Basisbereiche (40, 48) der wenigstens zwei Lamellen (34) im Wesentlichen in einer fixen Stellung zueinander sind.

3. Befestigungsanordnung (30) nach einem der vorhergehenden Ansprüche, wobei wenigstens ein Abstandsstück (52) zwischen dem Lamellensatz (32) und der Klammer (54) vorgesehen ist.

4. Befestigungsanordnung (30) nach einem der vorhergehenden Ansprüche, wobei sich ein elastomerisches Bauteil (62) zwischen dem Lamellensatz (32) und der Klammer (54) befindet.

5. Befestigungsanordnung (30) nach Anspruch 4, wobei der Lamellensatz (32) und das Kraftstoffverteilerrohr (14) in einer neutralen Position jeweils erste und zweite Längsachsen (15, 31) definieren, wobei die erste und zweite Längsachse (15, 31) im Wesentlichen senkrecht zueinander sind.

6. Befestigungsanordnung (30) nach einem der vorhergehenden Ansprüche, wobei die wenigstens zwei Lamellen (34) dazu ausgebildet sind, sich gleichzeitig zu biegen.

7. Befestigungsanordnung (30) nach einem der vorhergehenden Ansprüche, wobei der Lamellensatz (34) dazu ausgebildet ist, den ersten und zweiten Bereich (36, 44) in Richtung einer ersten Position relativ zueinander unter Vorspannung zu setzen.

8. Befestigungsanordnung (30) nach einem der vorhergehenden Ansprüche, wobei die flexible Befestigungsanordnung (30) dazu ausgebildet ist, ihre Gestalt zum Aufnehmen von thermischer Expansion von wenigstens dem zweiten Element (46) anzupassen.

9. Verfahren zum Verbinden einer flexiblen Befestigungsanordnung (30), wobei das Verfahren umfasst:
Verbinden der Befestigungsanordnung (30) nach einem der vorhergehenden Ansprüche zwischen dem Kraftstoffverteilerrohr (14) und der Brennkraftmaschine (10);
thermisches Expandieren des Kraftstoffverteilerrohrs (14), wenn die Brennkraftmaschine (10) betrieben wird;
Biegen des Lamellensatzes (32) zum Aufnehmen der Ausdehnung der Komponente.

10. Verfahren nach Anspruch 9, weiter umfassend:
Deformieren eines elastomerischen Bauteils (62) zum wenigstens teilweisen Kompensieren einer durch das Biegen des Lamellensatzes verursachten Achsverschiebung.

## Revendications

1. Aménagement de montage flexible (30) comprenant :
- une potence (54) avec un aménagement de fixation (60), ladite potence (54) enserrant une rampe de carburant (14) ;
- un élément élastomère (62) intercalé entre ladite potence (54) et ladite rampe de carburant (14) ; et
- un jeu de lamelles (32) ayant au moins deux lamelles (34) aménagées adjacentes l'une par rapport à l'autre, ledit jeu de lamelles (32) ayant une première portion (36) adaptée pour se raccorder à une portion de moteur d'un moteur à combustion interne (10) et une seconde portion (44) raccordée à ladite potence (54), au moins l'une desdites première et seconde portions (36, 44) incluant des portions de base (40, 48) desdites au moins deux lamelles (34) qui sont bloqués l'une à l'autre.

2. Aménagement de montage (30) selon la revendication 1, dans lequel lesdites portions de base (40, 48) desdites au moins deux lamelles (34) sont dans une position sensiblement fixe l'une par rapport à l'autre.

3. Aménagement de montage (30) selon l'une quelconque des revendications précédentes, dans lequel au moins un élément d'espacement (52) est aménagé entre ledit jeu de lamelles (32) et ladite potence (54).

4. Aménagement de montage (30) selon l'une quelconque des revendications précédentes, dans lequel un élément élastomère (62) est intercalé entre ledit jeu de lamelles (32) et ladite potence (54).

5. Aménagement de montage (30) selon la revendication 4, dans lequel dans une position neutre ledit jeu de lamelles (32) et ladite rampe de carburant (14) définissent des premier et second axes longitudinaux (15, 31) respectivement, dans lequel lesdits premier et second axes longitudinaux (15, 31) sont sensiblement perpendiculaires l'un à l'autre.

6. Aménagement de montage (30) selon l'une quelconque des revendications précédentes, dans lequel lesdites au moins deux lamelles (34) sont configurées pour fléchir simultanément.

7. Aménagement de montage (30) selon l'une quelconque des revendications précédentes, dans lequel ledit jeu de lamelles (34) est configuré pour solliciter lesdites première et seconde portions (36, 44) vers une première position l'une par rapport à l'autre.

8. Aménagement de montage (30) selon l'une quelconque des revendications précédentes, dans lequel ledit aménagement de montage flexible (30) est configuré pour adapter sa forme pour s'accommoder d'une dilatation thermique d'au moins ledit second élément (46).

9. Procédé de raccordement d'un aménagement de montage flexible (30), le procédé comprenant :
le raccordement de l'aménagement de montage (30) selon l'une quelconque des revendications précédentes entre ladite rampe de carburant (14) et ledit moteur à combustion interne (10) ;
la dilatation thermique de la rampe de carburant (14) lorsque ledit moteur à combustion interne fonctionne (10) ;
le fléchissement dudit jeu de lamelles (32) pour s'accommoder d'une dilatation dudit élément.

10. Procédé selon la revendication 9, comprenant en outre :
la déformation d'un élément élastomère (62) pour compenser au moins partiellement le défaut d'alignement causé par ledit fléchissement dudit jeu de lamelles.
